# NEW EUROPEAN PATENT SPECIFICATION

(11) **EP 2 925 511 B3**
(45) Date of publication of this specification: **12.12.2018**
(45) Mention of the grant of the patent: 10.01.2018
(21) Application number: 13834309.0
(22) Date of filing: 27.11.2013
(51) Int. Cl.: B29D 30/00, B29D 30/20

(54) **METHOD AND PLANT FOR BUILDING TYRES**
VERFAHREN UND ANLAGE ZUR HERSTELLUNG VON REIFEN
PROCÉDÉ ET INSTALLATION POUR FABRIQUER DES PNEUS

(30) Priority: 30.11.2012 IT MI20122044; 07.12.2012 US 201261734407 P
(43) Date of publication of application: 07.10.2015
(73) Proprietor: Pirelli Tyre S.p.A., 20126 Milano (IT)
(72) Inventor: MIRTO, Antonio, I-20126 Milano (IT); MARCHINI, Maurizio, I-20126 Milano (IT); MANDELLI, Walter, I-20060 Bellinzago Lombardo (Milano) (IT)
(74) Representative: Vittorangeli, Lucia
(86) International application number: PCT/IB2013/060445
(87) International publication number: WO 2014/083513

(56) References cited:
- WO-A1-2009/040594
- WO-A1-2010/070374
- WO-A1-2011/018687
- WO-A1-2011/077236
- WO-A1-2011/148283
- US-A- 2 818 907

## Description

The present invention relates to a method and a plant for building tyres.

The production cycles of a tyre provide for manufacturing and/or assembling the various components of a tyre being processed in one or more building lines and subsequently subjecting the tyre being processed to a moulding and curing process adapted to define the structure of the tyre according to a desired geometry and tread design.

A tyre generally comprises a carcass structure comprising at least one carcass ply made of elastomeric material strengthened with reinforcement cords lying in the "radial" tyres in substantially radial planes (a radial plane contains the rotation axis of the tyre). Each carcass ply has respectively opposite end flaps engaged with respective annular anchoring structures, generally termed "bead cores". Each bead core is integrated in a zone of the tyre usually identified with the name of "bead", constituting a radially internal end of the tyre having an internal diameter substantially corresponding to a so-called "fitting diameter" of the tyre on a respective mounting rim.

The tyre further comprises a crown structure comprising at least one belt layer situated in radially external position with respect to the carcass ply.

The belt layer is made of elastomeric material provided with reinforcement cords, usually metallic, arranged parallel to each other and lying in planes that are inclined with respect to the radial planes of the tyre. In the case of multiple belt layers that are radially superimposed on each other, the cords of a layer are generally crossed with respect to that of the adjacent layer.

A third layer of textile or metallic cords arranged circumferentially (layer at zero degrees) can also be provided.

The crown structure further comprises a tread band made of elastomeric material arranged radially external with respect to the belt layers. A relief design is obtained on the tread band for the contact with the ground after the termination of the moulding and curing steps.

Between the tread band and the belt layer(s), a so-called "underlayer" can be interposed that is made of elastomeric material, with properties suitable for ensuring a stable union of the belt layer(s) with the tread band itself.

On the lateral surfaces of the carcass structure, each extending from one of the lateral edges of the tread band up to the respective annular structure for anchoring to the beads, respective sidewalls made of elastomeric material are also applied.

In the tyres of "tubeless" type, the carcass ply is internally covered by a layer of elastomeric material, preferably with butyl base, usually termed "liner" having optimal air impermeability characteristics and extending from one bead to the next.

By "elastomeric material" it is intended to indicate a composition comprising at least one elastomeric polymer and at least one reinforcement filler. Preferably, such composition further comprises additives such as, for example, a cross-linking agent and/or a plasticization agent. Due to the presence of the cross-linking agent, such material can be cross-linked by heating, so as to form the final manufactured product.

By "green tyre" it is indicated a tyre obtained from the building process and notyet moulded and cured.

By "tyre being processed" it is intended the green tyre or a portion thereof.

By "structural component" of the tyre it is intended any one part of the tyre suitable for carrying out a structural function in the tyre being processed or a portion thereof. For example, the following are structural components: the abovementioned bead cores, the carcass ply/plies, the liner, the belt layer(s), the underlayer of the tread band, the sidewalls and the tread band. Further structural components can also be provided, such as one or more from among the following: under-liner, anti-abrasive, bead filler, underlayer of the crown structure, sidewall inserts, reinforcement inserts.

By "building operation" it is intended the building or assembly of at least one structural component of the green tyre.

By production "cycle time" relative to a plant for building tyres, it is intended the time interval between the end of the building of a green tyre and the end of the building of a green tyre immediately subsequent thereto. In plants comprising a plurality of work stations, this substantially corresponds in operation with the time required for the tyre being processed to cross the slowest work station.

The document US 2,818,907 describes a plant for building tyres comprising a series of collapsible forming drums carried by a conveyor through a series of successive forming stations. The plant comprises a rings positioning unit arranged at the first forming station and a rings removal unit.

The document WO 2011/018687 on behalf of the same Applicant shows a plant for building tyres, each tyre comprising a carcass structure having at least one carcass ply and one pair of annular anchoring structures. In a carcass structure building line, a building process is actuated comprising:
building at least one structural component of the tyre being processed on a forming drum provided with a pair of support rings in at least one work station of the carcass structure building line;
removing the pair of support rings from the forming drum in a support rings removal work station;
transferring the pair of support rings detached from the forming drum into a temporary storage for support rings;
building at least one further structural component of the tyre being processed on the forming drum lacking the pair of support rings in a work station of the carcass structure building line;
toroidally shaping the carcass structure and assembling it to the crown structure of the tyre being processed, arriving from a building line of the crown structure, in a shaping and assembly station;
removing the shaped tyre from the forming drum in a manner such that it can be transferred to a moulding and curing line for obtaining the finished product; transferring the forming drum, lacking the tyre being processed, directly to a support rings association station, where it is associated with a pair of support rings and, according to the production requirements, it can be transferred into the temporary storage for forming drums or begin a new building cycle.

The Applicant has established that a plant like that described in US 2,818,907 is rigid, since the sequence of forming drums and relative rings is obligatory and does not allow obtaining high production flexibility.

The Applicant has observed that in order to change the dimensions of the tyre being processed in the plants of the type illustrated in WO 2011/018687, it is necessary to transfer, into the temporary storage, the forming drum coming from the building line (once again associated with the respective pair of support rings) and pick up, from the temporary storage, the forming drum associated with the respective pair of support rings adapted to the dimension of the tyre to be built, selecting from among a plurality of forming drums associated with the respective pair of support rings that which has the necessary dimensions.

The Applicant has established that adapting a plant of the type illustrated in WO 2011/018687 to the current requirements of high flexibility of production of different tyre dimensions would lead to drawbacks that would make the use thereof not always convenient. It would be necessary, for example, to manage a high number of forming drums and support rings, providing for a rather high plurality of setting operations for the different axial dimensions necessary for the forming drums, even if of equal fitting.

The aforesaid operations, even managed in dedicated stations, could lead to an increase of the production cycle time of the plant.

The Applicant has perceived that the management of the forming drum, preferably starting from a single configuration mode (e.g. detached from the respective support rings) and from a single storage zone (e.g. a single temporary storage of forming drums in standby), can come to resolve the abovementioned drawbacks.

More precisely, the Applicant has found that placing in standby each forming drum detached from the respective pair of support rings coming from the building line and selecting each forming drum to be associated with the respective pair of support rings from among a plurality of forming drums detached from the respective pair of support rings and placed in standby, comprising that arriving from the building line, allows obtaining a high flexibility of production, avoiding the management of a high number of forming rings and/or increasing the production cycle time of the plant.

More precisely, in accordance with a first aspect, the invention relates to a method for building tyres according to claim 1.

The Applicant deems that the aforesaid solution allows at least one additional degree of freedom in the selection of each forming drum, allowing for example the use of forming drums that can be subjected to axial dimension setting in order to allow the building, with the same forming drum, of tyres with different dimensions, without negatively affecting the cycle time due to the difficulty of managing the set of forming drums and corresponding pairs of support rings.

In accordance with a second aspect, the invention relates to a plant for building tyres according to claim 11.

The Applicant deems that the presence and the use of the temporary storage for placing in standby the forming drums separated from the tyre being processed and detached from the respective pair of support rings allows selecting any forming drum, even if it can be subjected to axial dimension setting, without negatively affecting the cycle time.

The present invention in at least one of the aforesaid aspects can have at least one of the following preferred characteristics.

Preferably said forming drum separated from the tyre being processed is placed in standby in said forming drums temporary storage following the separation of the tyre being processed from the forming drum without carrying out any building operation.

The direct transfer of the forming drums to the forming drums temporary storage allows centralising the management of the forming drums themselves within the forming drums temporary storage.

Preferably it is provided to select, from among said plurality of forming drums in standby in said forming drums temporary storage, said last forming drum in standby.

Preferably it is provided to select, from among said plurality of forming drums in standby in said forming drums temporary storage, a forming drum different from said last forming drum in standby.

The forming drums temporary storage therefore represents a transition position that does not negatively affect the cycle time and allows optimising the devices for transferring to and from the forming drums temporary storage.

Preferably it is provided to transfer, into said forming drums temporary storage said last forming drum in standby.

The use of the forming drums temporary storage as transition position allows centralising the management of the forming drums within the temporary storage itself.

Preferably it is provided to select, from among said plurality of forming drums in standby, a forming drum different from said last forming drum in standby and subsequently transfer, into said forming drums temporary storage, said last forming drum in standby.

The management of the forming drums within the forming drums temporary storage can therefore occur simultaneously with the coupling of the support rings, also providing for the setting and/or controlling of at least one axial dimension of the forming drum.

Preferably it is provided to carry out a sequence of operations for managing at least one pair of support rings detached from the respective forming drum.

The separate management of the forming drums and the pairs of support rings increases versatility and flexibility of the plant.

Preferably said sequence of operations for managing at least one pair of support rings comprises at least one from among:
placing in standby said at least one pair of support rings;
selecting at least one pair of support rings in standby for coupling to the respective selected forming drum.

Preferably said first or second sequence of operations for building a tyre being processed comprises building at least one structural component of said tyre being processed.

Preferably said first sequence of operations for building carried out on said forming drum associated with said pair of support rings comprises building at least one structural component of a carcass structure of the tyre being processed.

Preferably said second sequence of operations for building carried out on said forming drum detached from said pair of support rings, comprises building at least one further structural component of the carcass structure of the tyre being processed.

Preferably said first and second sequence of operations for building a tyre being processed comprise building a carcass structure of the tyre being processed, the latter then being shaped and assembled to a respective crown structure of the tyre being processed, defining a green tyre.

Preferably an operation for building a first tyre being processed is adapted to be carried out on a first forming drum associated with the respective pair of support rings simultaneously and independently, relative to a different operation for building a second tyre being processed carried out on a second forming drum associated with the respective pair of support rings or an operation for building a third tyre being processed carried out on a third forming drum detached from the respective pair of support rings or vice versa.

Preferably it is provided to control at least one axial dimension of the selected forming drum before coupling it to the respective pair of support rings.

Preferably it is provided to set and control at least one axial dimension of the selected forming drum before coupling it to the respective pair of support rings.

Preferably said forming drum selected from the forming drums temporary storage is transferred to a station for coupling pairs of support rings for associating the selected forming drum to a respective pair of support rings.

Preferably it is provided to move said last forming drum transferred in the forming drums temporary storage from a temporary standby position to a final standby position.

Preferably it is provided to pick up from the forming drums temporary storage a forming drum different from said last forming drum transferred in the forming drums temporary storage and subsequently move said last forming drum transferred in the forming drums temporary storage from a temporary standby position to a final standby position.

Preferably at least one from among the following is provided for:
transferring at least one pair of support rings detached from the respective forming drum from a removing station for removing the pair of support rings to a pairs of support rings temporary storage;
transferring at least one pair of support rings in standby in a pairs of support rings temporary storage to a station for coupling pairs of support rings for coupling to the respective forming drum.

Preferably said forming drums temporary storage is directly served by the shaping station.

Preferably said shaping station is adapted to shape a carcass structure assembling it to a crown structure of the tyre being processed.

Preferably the following are provided for:
a crown structure building line,
a carcass structure building line,
said carcass structure building line comprising: said plurality of forming drums, said at least one pair of support rings, said forming drums temporary storage, said coupling station, said first sequence of building stations, said removing station, said second sequence of building stations.

Preferably a pairs of support rings temporary storage is provided for pairs of support rings detached from the forming drums.

Preferably a pairs of support rings temporary storage transfer device is provided, served by the pairs of support rings temporary storage for transferring the pairs of support rings from the removing station to the pairs of support rings temporary storage and/or from the pairs of support rings temporary storage to the coupling station.

Preferably said pairs of support rings temporary storage transfer device comprises an anthropomorphic robotic arm associated with a travel line.

Preferably the plant comprises a forming drums storage transfer device served by the forming drums temporary storage for transferring the forming drums from the temporary storage to the coupling station.

Preferably the forming drums storage transfer device is adapted to select, in the forming drums temporary storage, a forming drum as a function of the dimensions of the tyre to be built and transfer it to the coupling station.

Preferably the plant comprises a forming drums storage transfer device served by the forming drums temporary storage adapted to transfer the forming drums within the forming drums temporary storage.

Preferably said forming drums storage transfer device comprises an anthropomorphic robotic arm associated with a travel line.

Further characteristics and advantages of the invention will be evident from the following description of several embodiments of methods and plants for building tyres according to the invention, given as a non-limiting example with reference to the enclosed figures in which:
- figure 1 shows a schematic lay-out of a plant for building tyres in which the method and the process are actuated according to one embodiment of the present invention;
- figure2 schematically shows, in interrupted diameter section, a tyre embodiment that can be obtained by the method and the plant, object of the present invention.

With reference to the enclosed figure, reference number 1 indicates overall a plant for building tyres for vehicle wheels according to a preferred embodiment of the present invention.

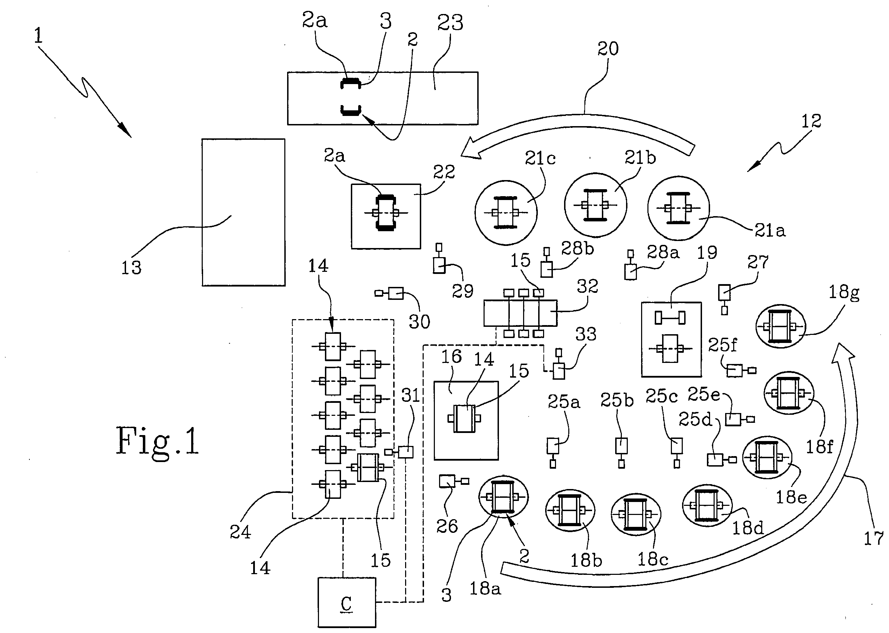

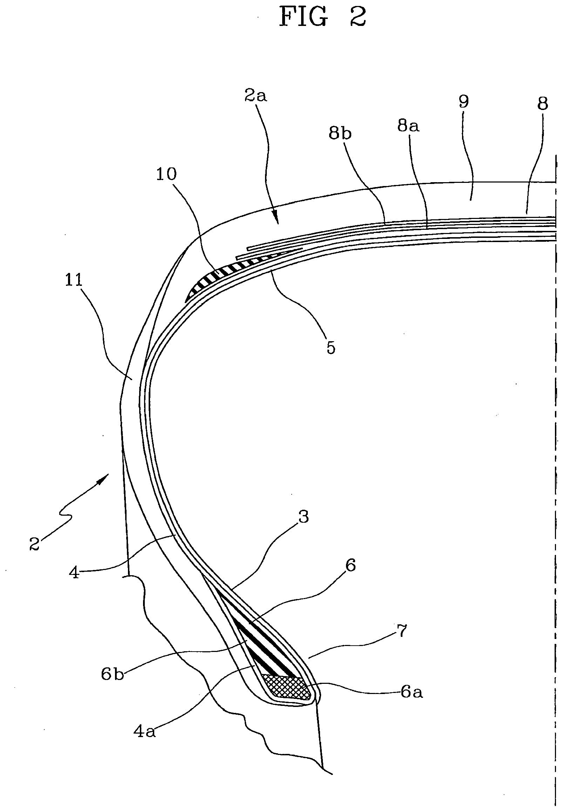

The plant 1 is set to manufacture tyres 2 (figure 2) essentially comprising a carcass structure 3 having at least one carcass ply 4 and one crown structure 2a associated in radially external position relative to said carcass structure 3. In figure 1, the same reference numbers were used for identifying a tyre being processed and in particular a carcass structure being processed.

Figure 2 illustrates in particular a possible embodiment of a tyre that can be built by the plant according to the present invention. The tyre 2 comprises a layer of impermeable elastomeric material or so-called liner 5 which can be applied within the carcass ply/plies 4.

Two annular anchoring structures 6, comprising each a so-called bead core 6a carrying an elastomeric filler 6b in radially external position, are engaged with respective end flaps 4a of the carcass ply/plies 4.

The annular anchoring structures 6 are integrated in proximity to zones normally identified with the name of "beads" 7, at which the engagement between the tyre 2 and a respective mounting rim usually occurs.

Preferably the crown structure 2a comprises at least one belt structure having at least one belt layer. Still more preferably, the crown structure comprises a belt structure having at least one belt layer and one tread band.

In the embodiment illustrated in figure 2, a belt structure 8 comprising two belt layers 8a, 8b is circumferentially applied around the carcass ply/plies 4. A tread band 9 is circumferentially superimposed on said belt structure 8.

The belt structure 8 can be associated with so-called "under-belt inserts" 10 each situated between the carcass ply/plies 4 and one of the axially opposite terminal edges of the belt structure 8. In addition to or as an alternative to the under-belt inserts 10, annular inserts made of elastomeric material and/or comprising cords or other reinforcement elements can be radially superimposed at least on the axially opposite terminal edges of the belt structure 8, and/or interposed between the belt layers 8a, 8b, at least at said terminal edges.

Two sidewalls 11, each extending from the corresponding bead 7 to a corresponding lateral edge of the tread band 9, are applied in laterally opposite positions on the carcass ply/plies 4.

In the illustrated embodiment, the plant 1 comprises a carcass structure building line 12 and a crown structure building line 13. The latter is only schematised in figure 1.

The carcass structure building line 12 comprises a plurality of forming drums 14. The carcass structure building line 12 further comprises at least one pair of support rings 15 which can be removably associated with at least one of the forming drums 14. By "pair of support rings" it is intended a pair of extensions adapted to be associated with a respective forming drum in order to extend axial dimension thereof in some steps where at least one structural component is built of the tyre being processed. In other words, the support rings 15 cooperate with the respective forming drum 14 in the building of at least one portion of the carcass structure of the tyre being processed.

The carcass structure building line 12 comprises a station 16 for coupling pairs of support rings 15 to the respective forming drum 14.

The coupling station 16 comprises at least one device adapted to associate a pair of support rings with the respective drum. The coupling station 16 comprises at least one device adapted to control at least one axial dimension of the forming drum 14 before coupling it to the respective pair of support rings 15. In particular, the coupling station 16 comprises at least one device adapted to set and control at least one axial dimension of the forming drum 14 before coupling it to the respective pair of support rings 15.

According to the embodiment illustrated in figure 1, the carcass structure building line 12 further comprises a first sequence 17 of building stations 18a-18g for tyres being processed. Each building station 18a-18g of the first sequence 17 operates on a forming drum 14 associated with a pair of support rings 15.

A different number of building stations of the first sequence 17 can be present with respect to that illustrated, also with a different arrangement with respect thereto. Figure 1 indeed shows only one possible embodiment in which the first sequence 17 is defined by a reinforcement fabric building station 18a, an anti-abrasive building station 18b, a liner building station 18c, an under-liner building station 18d, a ply building station 18e, a first intermediate elements building station 18f and an internal reinforcements building station 18g.

According to the embodiment illustrated in figure 1, the carcass structure building line 12 comprises a removing station 19 for removing pairs of support rings 15 from the respective forming drum 14. The removing station 19 comprises a device adapted to remove the pair of support rings 15 from the respective forming drum 14.

According to the embodiment illustrated in figure 1, the carcass structure building line 12 comprises a second sequence 20 of building stations 21a-21c of tyres being processed. Each building station 21a-21c operates on a forming drum 14 detached from the relative pair of support rings 15. A different number of building stations of the second sequence 20 can be present with respect to that illustrated, also with a different arrangement with respect thereto. Figure 1 indeed shows only one embodiment in which the second sequence 20 is defined by an annular anchoring structures building station 21a, an anti-abrasive building station 21b and a sidewalls building station 21c.

According to the embodiment illustrated in figure 1, the carcass structure building line 12 is operatively associated with a shaping station 22. In particular, with reference to the plant of figure 1, the shaping station 22 is adapted to shape a carcass structure coming from the carcass structure building line 12, assembling it to a crown structure of the tyre being processed coming from the crown structure building line 13. In particular the carcass structure associated with the forming drum 14 receives the crown structure in radially external position. When the crown structure is in centred position with respect to the carcass structure, the carcass structure is shaped in a perse known manner according to a toroidal configuration. The consequent radial expansion of the carcass ply/plies brings the same to adhere against the internal surface of the crown structure.

The tyre thus built is adapted to be removed from the shaping station 22 in order to be subjected to a moulding and curing treatment in a moulding and curing station 23, and/or to other processes provided for in the work cycle.

With reference to the embodiment illustrated in figure 1, the carcass structure building line 12 comprises a forming drums temporary storage 24 for placing in standby the forming drums 14 separated from the tyre being processed. Preferably the forming drums temporary storage 24 receives in standby the forming drums 14 separated from the tyre being processed coming from the shaping station 22.

In accordance with a possible embodiment, the forming drums temporary storage 24 receives in standby a plurality of forming drums 14. Preferably the plurality of forming drums 14 (thus detached from the respective pairs of support rings 15) comprises at least two forming drums that are different from each other in order to achieve two different tyres.

With reference to the embodiment illustrated in figure 1, the forming drums temporary storage 24 is directly served by the shaping station 22.

Preferably the plant 1 and in particular the carcass structure building line 12 comprises at least one transfer device adapted to transfer the forming drum 14. One or more transfer devices can be provided for. With reference to the embodiment illustrated in figure 1, different transfer devices are provided for each transfer and/or handling of the forming drum. Alternatively, two or more functions can be set together on a same transfer device.

For example, 25a-25f indicate first transfer devices operating on the forming drum 14 associated with the respective pair of support rings 15. The first transfer devices 25a-25f are adapted to transfer the forming drum 14 associated with the respective pair of support rings 15 along the first sequence 17 of building operations and then along the first sequence of building stations 18a-18g in particular from one building station to a subsequent, not necessarily adjacent building station.

In a possible embodiment for example illustrated in figure 1, a specific transfer device or initial transfer device 26 can be provided, adapted to transfer the forming drum 14 associated with the respective pair of support rings 15 from the coupling station 16 to the first of the building stations of the first sequence 17.

In a possible embodiment for example illustrated in figure 1, a specific transfer device or intermediate transfer device 27 can be provided, adapted to transfer the forming drum 14 associated with the respective pair of support rings 15 from the last building station of the first sequence 17 to the removing station 19. The same intermediate transfer device 27 may possibly be adapted to transfer the forming drum 14 detached from the respective pair of support rings 15 from the removing station 19 to the first of the building stations of the second sequence 20.

28a-28b indicate, by way of example, second transfer devices operating on the forming drum 14 detached from the respective pair of support rings 15. The second transfer devices 28a-28b are adapted to transfer the forming drum 14 detached from the respective pair of support rings 15 along the second sequence 20 of building operations and then along the second sequence of building stations 21a-21c in particular from one building station to a subsequent, not necessary adjacent building station.

In a possible embodiment, a specific transfer device or final transfer device 29 can be provided, adapted to transfer the forming drum 14 detached from the respective pair of support rings 15 to the shaping station 22 and possibly adapted to transfer the forming drum 14, detached from the respective pair of support rings 15 and from the tyre being processed, from the shaping station 22 to the forming drums temporary storage 24. In a possible embodiment, illustrated for example in figure 1, in order to carry out the two aforesaid functions, a first and a second final transfer device 29, 30 can be provided. In particular, the second final transfer device is adapted to place in standby, in the forming drums temporary storage 24, the forming drum 14 separated from the tyre being processed, generating a last forming drum 14 of the plurality of forming drums 14 in standby in the forming drums temporary storage 24.

The above-described transfer devices can for example comprise a robotic arm, preferably anthropomorphic.

31 indicates a forming drums storage transfer device served by the forming drums temporary storage 24 for transferring the forming drums from the forming drums temporary storage 24 to the coupling station 16. The forming drums storage transfer device 31 is adapted to select, in the forming drums temporary storage 24, a forming drum 14 as a function of the dimensions of the tyre to be built and transfer it to the coupling station 16. For such purpose, the plant 1 can comprise a control module C which receives the indications regarding the type of tyre to be built, manages the presence of the forming drums 14 in the forming drums temporary storage 24 and drives the forming drums storage transfer device 31.

Advantageously the forming drums storage transfer device 31 is different from the first and/or second final transfer device 29, 30.

Preferably the forming drums storage transfer device 31 is further adapted to transfer the forming drums 14 within the forming drums temporary storage 24. In particular, the forming drums storage transfer device 31 is adapted to transfer the last forming drum 14 placed in standby following the separation of the tyre being processed. In this case, the forming drums storage transfer device 31 selects, from among the plurality of forming drums 14 in standby, a forming drum 14 different from the last placed in standby following the separation of the tyre being processed and subsequently transfers within the forming drums temporary storage 24 the last forming drum 14 placed in standby.

The above-described forming drums storage transfer device 31 can for example comprise a robotic arm, preferably anthropomorphic, still more preferably associated with a travel line.

With reference to the embodiment illustrated in figure 1, the carcass structure building line 12 comprises a pairs of support rings temporary storage 32 in which the pairs of support rings 15 detached from the forming drums 14 are positioned.

33 indicates a pairs of support rings storage transfer device served by the pairs of support rings temporary storage 32 for transferring the pairs of support rings 15 from the removing station 19 to the pairs of support rings temporary storage 32 and/or from the pairs of support rings temporary storage 32 to the coupling station 16.

The pairs of support rings storage transfer device 33 is adapted to select, in the pairs of support rings temporary storage 32, the pair relative to the forming drum 14 selected from the forming drums temporary storage 24 as a function of the dimensions of the tyre to be built. For such purpose the plant 1 can comprise a control module C which receives the indications regarding the type of tyre to be built, manages the presence of the pairs of support rings 15 in the pairs of support rings temporary storage 32 and drives the pairs of support rings storage transfer device 33.

The above-described pairs of support rings storage transfer device 33 can for example comprise a robotic arm, preferably anthropomorphic, still more preferably associated with a travel line.

In the plant according to the invention the following method for building tyres is attained, described with reference to the plant illustrated in figure 1 but not limited thereto.

The described method is particularly advantageous in the case of building tyres starting from elementary semifinished products. With the term "elementary semifinished products" it is intended a semifinished product in the form of at least one of the following: a continuous elongated element made of elastomeric material; a textile or metallic reinforcement cord preferably covered with elastomeric material; a belt-like element made of elastomeric material comprising at least two textile or metallic cords. The latter when cut to size is termed "strip-like element".

As an alternative, the above-described method can also be used in the case of building tyres starting from conventional semifinished products produced separately and stored, such as: belt layers, carcass plies, tread bands, sidewalls, bead cores, anti-abrasive elongated elements, bead fillers, reinforcement fabrics, sidewall inserts, under-belt inserts, underlayers, reinforcement inserts, liner, under-liner, etc..

At the start of the tyre processing cycle, one proceeds to select, in the forming drums temporary storage 24, a forming drum 14 as a function of the dimensions of the tyre to be built.

The selected forming drum 14 is transferred to the coupling station 16. In the coupling station 16, one proceeds to associate the selected forming drum 14 with a respective pair of support rings 15. The respective pair of support rings 15 is previously selected from the pairs of support rings temporary storage 32 and transferred to the coupling station 16.

In accordance with a possible embodiment, in the coupling station 16 one proceeds to control (preferably to set and control) at least one axial dimension of the selected forming drum 14 before coupling it to the respective pair of support rings 15.

The drum 14 associated with the respective pair of support rings 15 is then transferred along the first sequence 17 of tyre building stations 18a-18g for carrying out a first sequence of operations for building a tyre being processed, in particular a carcass structure being processed, on the forming drum 14 associated with the pair of support rings 15.

For example, the first sequence of building operations carried out on the forming drum associated with the pair of support rings comprises building at least one structural component of a carcass structure of the tyre being processed. In the illustrated embodiment, the first sequence of operations for building comprises the building of the following structural components of the carcass structure being processed: reinforcement fabric, anti-abrasive, liner, under-liner, carcass ply/plies, first intermediate elements and internal reinforcements. Of course, different sequences of building operations are possible as a function of the type of tyre to be built.

At the end of the first sequence of building operations, the forming drum 14 associated with the respective pair of support rings 15 and carrying the tyre being processed, in particular the carcass structure being processed, is transferred to the removing station 19 for removing the pair of support rings 15 from the forming drum 14. Following such removal, the tyre being processed, in particular the carcass structure being processed, remains associated with the forming drum 14 detached from the pair of support rings 15.

The drum 14 detached from the respective pair of support rings 15 is then transferred along the second sequence 20 of tyre building stations 21a-21c for carrying out a second sequence of operations for building the tyre being processed, in particular the carcass structure being processed, on the forming drum 14 detached from the pair of support rings 15.

For example, the second sequence of building operations, carried out on the forming drum 14 detached from the pair of support rings 15, comprises building at least one further structural component of the carcass structure of the tyre being processed. In the illustrated embodiment, the second sequence of building operations comprises the building of the following structural components of the carcass structure being processed: annular anchoring structures, anti-abrasive and sidewalls. Of course, different sequences of building operations are possible as a function of the type of tyre to be built.

In order to terminate the second sequence of building operations, the forming drum 14 detached from the respective pair of support rings 15 and carrying the tyre being processed, in particular the carcass structure being processed, is transferred to the shaping station 22 in order to be associated by means of shaping with a respective crown structure 2a, in the end generating a green tyre that is subsequently separated from the forming drum 14, the tyre building being terminated.

Preferably the first and second sequence of operations for building a tyre being processed comprise building a carcass structure of the tyre being processed, shaping it and assembling it to a respective crown structure of the tyre being processed at the shaping station 22. The carcass structure of the tyre being processed, shaped and assembled to the respective crown structure, finally defines a finished green tyre that, once separated from the forming drum, is transferred to the moulding and curing station 23, and/or to other processes provided for in the work cycle.

In general, the first and/or second sequence of operations for building a tyre being processed comprises building at least one structural component of the tyre being processed.

At the end of the work cycle, the forming drum 14 separated from the tyre being processed is placed in standby in the forming drums temporary storage 24.

In accordance with an embodiment, the forming drum 14 separated from the tyre being processed is placed in standby in the forming drums temporary storage 24 following the separation of the tyre being processed from the forming drum 14 without carrying out any building operation.

At the time of the start of a new work cycle, it is possible to select, from among the plurality of forming drums 14 in standby in the forming drums temporary storage 24, the last forming drum placed in standby. Alternatively, it is possible to select a forming drum 14 different from the last one placed in standby.

After the last forming drum 14 coming from the shaping station 22 is transferred into the forming drums temporary storage 24 following the separation of the tyre being processed, it is possible that the new work cycle starts by directly selecting the last forming drum 14 or a different drum. In particular in the latter case, after the selection, it is possible that the last drum is transferred within the forming drums temporary storage 24.

For example, the last forming drum 14 transferred into the forming drums temporary storage 24 is initially positioned in a temporary standby position. After the selection of a different forming drum, the last forming drum 14 transferred in the forming drums temporary storage 24 can then be transferred from the temporary standby position to a final standby position. Preferably both the selection and the transfer to the coupling station 16 of the forming drum 14 that starts the new cycle, and the transfer of the forming drums within the forming drums temporary storage 24 (in particular of the last forming drum) are carried out by a single storage transfer device 31.

With reference to that described above, it must be noted that the forming drum 14 leaving the carcass structure building line 12 is always placed in standby in the forming drums temporary storage 24 of the forming drums.

The forming drum 14 leaving the carcass structure building line 12 is a forming drum 14 detached from the respective pair of support rings 15, and from which the tyre being processed has been picked up.

If the processing cycle provides that the forming drum leaving the carcass structure building line 12 coincides with the forming drum entering the carcass structure building line 12, the storage transfer device 31 picks it up from the initial standby position and transfers it to the coupling station 16.

If the processing cycle provides that the forming drum leaving the carcass structure building line 12 differs from the forming drum entering the carcass structure building line 12, the storage transfer device 31 picks up the selected forming drum and transfers it to the coupling station 16.

Subsequently the storage transfer device 31 can pick up the forming drum leaving the initial standby position and transfer it to the final standby position.

In the method according to the present invention, it is provided to carry out a sequence of operations for managing at least one pair of support rings 15 detached from the respective forming drum 14. For example, such sequence of management operations can comprise at least one from among:
placing in standby the pair of support rings, for example picking it up from the removing station 19 and transferring it into the pairs of support rings temporary storage 32;
selecting a pair of support rings in standby for coupling to the respective selected forming drum 14, for example picking up the pair of rings selected from the pairs of support rings temporary storage 32 and transferring it to the coupling station 16.

In the plant according to the present invention, an operation for building a first tyre being processed is adapted to be carried out on a first forming drum 14 associated with the respective pair of support rings 15 simultaneously and independently, relative to a different operation for building a second tyre being processed carried out on a second forming drum 14 associated with the respective pair of support rings 15 or an operation for building tyre being processed carried out on a third forming drum 14 detached from the respective pair of support rings 15.

Analogously, an operation for building a third tyre being processed is adapted to be carried out on a third forming drum 14 detached from the respective pair of support rings 15 simultaneously and independently, relative to a different operation for building a fourth tyre being processed carried out on a fourth forming drum 14 detached from the respective pair of support rings 15 or an operation for building a first forming drum 14 associated with the respective pair of support rings 15.

More generally, in the plant according to the invention, it is possible to simultaneously build a number of tyres being processed (more precisely of carcass structures being processed) on forming drums 14 associated or not associated with the respective support rings 15, corresponding to the number of the work stations (18a-18g and 21a-21c according to the embodiment illustrated in figure 1) of the carcass structure building line 12; the building operations on each tyre being processed being carried out simultaneously and independently from each other.

With reference to the embodiment illustrated in figure 1, the forming drums temporary storage 24 can also receive forming drums 14 associated with the respective pair of support rings 15. In this case, the forming drums temporary storage 24 is used as inlet for new forming drums already provided with respective support rings (for example to be used for building tyres with dimensions different from those produced in the plant up to that time). The storage transfer device 31 picks up the forming drum 14 associated with the pair of support rings 15 and transfers it to the coupling station 16.

For setting and/or controlling at least one axial dimension of the forming drum, the coupling station 16 is adapted to previously decouple the pair of support rings. After the decoupling, one proceeds to control (preferably to set and control) at least one axial dimension of the forming drum before once again associating the pair of support rings 15 with the forming drum 14.

## Claims

1. A method for building tyres comprising:
selecting, in a forming drums temporary storage (24), a forming drum (14) as a function of the dimensions of the tyre to be built,
associating the selected forming drum (14) with a respective pair of support rings (15),
carrying out a first sequence (17) of operations for building a tyre being processed on said forming drum (14) associated with said pair of support rings (15),
removing said pair of support rings (15) from the forming drum (14), said tyre being processed remaining associated with the forming drum (14) detached from said pair of support rings (15),
carrying out a second sequence (20) of operations for building the tyre being processed on said forming drum (14) detached from said pair of support rings (15),
separating the tyre being processed from said forming drum (14), upon terminating the building of the tyre,
placing in standby, in said forming drums temporary storage (24), the forming drum (14) separated from the tyre being processed, generating a last forming drum (14) of a plurality of forming drums (14) in standby in said forming drums temporary storage (24).

2. A method for building tyres as claimed in claim 1, comprising selecting from among said plurality of forming drums (14) in standby in said forming drums temporary storage (24), said last forming drum (14) in standby.

3. A method for building tyres as claimed in claim 1, comprising selecting from among said plurality of forming drums (14) in standby in said forming drums temporary storage (24), a forming drum (14) different from said last forming drum (14) in standby.

4. A method for building tyres as claimed in claim 1, comprising transferring into said forming drums temporary storage (24) said last forming drum (14) in standby.

5. A method for building tyres as claimed in claim 1, wherein said first and second sequence (17, 20) of operations for building a tyre being processed comprise building a carcass structure (3) of the tyre being processed, the latter then being shaped and assembled to a respective crown structure (2a) of the tyre being processed, defining a green tyre.

6. A method for building tyres as claimed in claim 1, wherein an operation for building a first tyre being processed is adapted to be carried out on a first forming drum (14) associated with the respective pair of support rings (15) simultaneously and independently, relative to a different operation for building a second tyre being processed carried out on a second forming drum (14) associated with the respective pair of support rings (15) or an operation for building a third tyre being processed carried out on a third forming drum (14) detached from the respective pair of support rings (15) or vice versa.

7. A method for building tyres as claimed in claim 1, comprising setting and controlling at least one axial dimension of the selected forming drum (14) before coupling it to the respective pair of support rings (15).

8. A method for building tyres as claimed in claim 1, wherein said forming drum (14) selected from the forming drums temporary storage is transferred to a station (16) for coupling pairs of support rings for associating the selected forming drum (14) to a respective pair of support rings (15).

9. A method for building tyres as claimed in claim 1, comprising moving said last forming drum (14) transferred in the forming drums temporary storage (24) from a temporary standby position to a final standby position.

10. A method for building tyres as claimed in claim 1, comprising picking up, from the forming drums temporary storage (24), a forming drum (14) different from said last forming drum (14) transferred in the forming drums temporary storage (24) and subsequently moving said last forming drum (14) transferred in the forming drums temporary storage (24) from a temporary standby position to a final standby position.

11. A plant for building tyres comprising:
a plurality of forming drums (14),
at least one pair of support rings (15) which can be removably associated with at least one of said forming drums (14),
a coupling station (16) for coupling pairs of support rings (15) to the respective forming drum (14),
a first sequence of building stations (18a-18g) for tyres being processed, each operating on a forming drum (14) associated with one of said pairs of support rings (15),
a removing station (19) for removing pairs of support rings (15) from said forming drum (14),
a second sequence of building stations (21a-21c) of tyres being processed, each operating on a forming drum (14) detached from said pair of support rings (15),
a shaping station (22) wherein a shaped tyre being processed is separated from said forming drum (14) detached from said pair of support rings (15), **characterized in that** it comprises
a forming drums temporary storage (24) for placing in standby the forming drums (14) detached from said pair of support rings (15) and separated from the respective shaped tyre being processed coming from said shaping station (22) and
a control module (C) adapted to carry out:
receiving indications regarding the type of tyre to be built;
managing the presence of forming drums (14) in a forming drums temporary storage (24);
driving a forming drums storage transfer device (31);
managing the presence of pairs of support rings (15) in a pairs of support rings temporary storage (32);
driving a pairs of support rings storage transfer device (33).

12. A plant for building tyres as claimed in claim 11, comprising a forming drums storage transfer device (31) served by the forming drums temporary storage (24) for transferring the forming drums from the forming drums temporary storage (24) to the coupling station (16)wherein said forming drums storage transfer device (31) is adapted to select, in the forming drums temporary storage (24), a forming drum (14) as a function of the dimensions of the tyre to be built and transfer it to the coupling station (16).

13. A plant for building tyres as claimed in claim 11, comprising a forming drums storage transfer device (31) served by the forming drums temporary storage (24) adapted to transfer the forming drums (14) within the forming drums temporary storage (24).

14. A plant for building tyres as claimed in claim 12 or 13, wherein said forming drums storage transfer device (31) comprises an anthropomorphic robotic arm associated with a travel line.

## Patentansprüche

1. Verfahren zur Fertigung von Reifen, das die folgenden Schritte umfasst:
Auswählen einer Formungstrommel (14) in einem temporären Formungstrommel-Speicher (24) als eine Funktion der Dimensionen des Reifens, der gefertigt werden soll,
Zuordnen der ausgewählten Formungstrommel (14) an ein jeweiliges Paar von Trägerringen (15),
Ausführen einer ersten Abfolge (17) von Vorgängen zur Fertigung eines Reifens, der auf der Formungstrommel (14), die dem Paar von Trägerringen (15) zugeordnet ist, bearbeitet wird,
Entfernen des Paars von Trägerringen (15) von der Formungstrommel (14), wobei der bearbeitete Reifen der Formungstrommel (14) zugeordnet bleibt, die von dem Paar von Trägerringen (15) abgenommen wurde,
Ausführen einer zweiten Abfolge (20) von Vorgängen zur Fertigung des Reifens, der auf der Formungstrommel (14), die von dem Paar von Trägerringen (15) abgenommen wurde, bearbeitet wird,
Trennen des bearbeiteten Reifens von der Formungstrommel (14) nach Abschluss der Fertigung des Reifens,
Versetzen der von dem bearbeiteten Reifen getrennten Formungstrommel (14) in Bereitschaft in dem temporären Formungstrommel-Speicher (24), wobei eine letzte Formungstrommel (14) einer Vielzahl von Formungstrommeln (14) in Bereitschaft in dem temporären Formungstrommel-Speicher (24) erzeugt wird.

2. Verfahren zur Fertigung von Reifen nach Anspruch 1, umfassend das Auswählen der letzten Formungstrommel (14) in Bereitschaft aus der Vielzahl von Formungstrommeln (14) in Bereitschaft in dem temporären Formungstrommel-Speicher (24).

3. Verfahren zur Fertigung von Reifen nach Anspruch 1, umfassend das Auswählen einer anderen Formungstrommel (14) als der letzten Formungstrommel (14) in Bereitschaft aus der Vielzahl von Formungstrommeln (14) in Bereitschaft in dem temporären Formungstrommel-Speicher (24).

4. Verfahren zur Fertigung von Reifen nach Anspruch 1, das die folgenden Schritte umfasst
Überführen der letzten Formungstrommel (14) in Bereitschaft in den temporären Formungstrommel-Speicher (24).

5. Verfahren zur Fertigung von Reifen nach Anspruch 1, wobei die erste und zweite Abfolge (17, 20) von Vorgängen zur Fertigung eines bearbeiteten Reifens das Fertigen einer Karkassenstruktur (3) des aktuell bearbeiteten Reifens umfasst, die dann geformt und mit einer jeweiligen Zenithstruktur (2a) des aktuell bearbeiteten Reifens zusammengebaut wird, wodurch ein Rohreifen definiert wird.

6. Verfahren zur Fertigung von Reifen nach Anspruch 1, wobei ein Vorgang zur Fertigung eines ersten bearbeiteten Reifens dazu geeignet ist, an einer ersten Formungstrommel (14), die dem jeweiligen Paar von Trägerringen (15) zugeordnet ist, gleichzeitig mit und unabhängig von einem anderen Vorgang zur Fertigung eines zweiten bearbeiteten Reifens, der an einer zweiten Formungstrommel (14) ausgeführt wird, die dem jeweiligen Paar von Trägerringen (15) zugeordnet ist, oder von einem Vorgang zur Fertigung eines dritten bearbeiteten Reifens, der an einer dritten Formungstrommel (14) ausgeführt wird, die von dem jeweiligen Paar von Trägerringen (15) abgenommen wurde, ausgeführt zu werden, oder umgekehrt.

7. Verfahren zur Fertigung von Reifen nach Anspruch 1, das den Schritt des Festlegens und Steuerns zumindest einer axialen Dimension der ausgewählten Formungstrommel (14) umfasst, bevor sie mit dem jeweiligen Paar von Trägerringen (15) gekoppelt wird.

8. Verfahren zur Fertigung von Reifen nach Anspruch 1, wobei die Formungstrommel (14), die aus dem temporären Formungstrommel-Speicher ausgewählt wurde, an eine Station (16) zur Kopplung von Paaren von Trägerringen übertragen wird, um die ausgewählte Formungstrommel (14) mit einem jeweiligen Paar von Trägerringen (15) zu koppeln.

9. Verfahren zur Fertigung von Reifen nach Anspruch 1, das den Schritt des Bewegens der letzten Formungstrommel (14), die in den temporären Formungstrommel-Speicher (24) übertragen wurde, aus einer temporären Bereitschaftsposition in eine endgültige Bereitschaftsposition umfasst.

10. Verfahren zur Fertigung von Reifen nach Anspruch 1, das die folgenden Schritte umfasst: Aufnehmen einer anderen Formungstrommel (14) als der letzten Formungstrommel (14), die in den temporären Formungstrommel-Speicher (24) überführt wurde, aus dem temporären Formungstrommel-Speicher (24), und in der Folge Bewegen der letzten Formungstrommel (14), die in den temporären Formungstrommel-Speicher (24) übertragen wurde, aus einer temporären Bereitschaftsposition in eine endgültige Bereitschaftsposition.

11. Anlage zur Fertigung von Reifen, umfassend:
eine Vielzahl von Formungstrommeln (14),
zumindest ein Paar von Trägerringen (15), die abnehmbar zumindest einer der Formungstrommeln (14) zugeordnet werden können,
eine Kopplungsstation (16) zum Koppeln von Paaren von Trägerringen (15) mit der jeweiligen Formungstrommel (14),
eine erste Abfolge von Fertigungsstationen (18a-18g) für bearbeitete Reifen, wobei jede davon auf eine Formungstrommel (14) wirkt, die einem der Paare von Trägerringen (15) zugeordnet ist,
eine Abnahmestation (19) zum Abnehmen der Paare von Trägerringen (15) von der Formungstrommel (14),
eine zweite Abfolge von Fertigungsstationen (21a-21c) für bearbeitete Reifen, wobei jede davon auf eine Formungstrommel (14) wirkt, die von dem Paar von Trägerringen (15) abgenommen wurde,
eine Formungsstation (22), in der ein geformter bearbeiteter Reifen von der Formungstrommel (14), die von dem Paar von Trägerringen (15) abgenommen wurde, getrennt wird,
**dadurch gekennzeichnet, dass** sie umfasst:
einen temporären Formungstrommel-Speicher (24) zum Versetzen der von der Formungsstation (22) kommenden Formungstrommeln (14), die von dem Paar von Trägerringen (15) abgenommen und von dem jeweiligen geformten bearbeiteten Reifen getrennt wurden, in Bereitschaft, und
ein Steuermodul (C), das dazu geeignet ist, Folgendes auszuführen:
Empfangen von Angaben in Bezug auf den Typ von Reifen, der gefertigt werden soll;
Verwalten der Präsenz von Formungstrommeln (14) in einem temporären Formungstrommel-Speicher (24);
Antreiben einer Formungstrommelspeicher-Übergabeeinrichtung (31);
Verwalten der Präsenz von Paaren von Trägerringen (15) in einem temporären Speicher (32) für Paare von Trägerringen;
Antreiben einer Speicherübergabeeinrichtung (33) für Paare von Trägerringen.

12. Anlage zur Fertigung von Reifen nach Anspruch 11, umfassend eine Formungstrommelspeicher-Übergabeeinrichtung (31), die von dem temporären Formungstrommel-Speicher (24) bedient wird, zur Übergabe der Formungstrommeln von dem temporären Formungstrommel-Speicher (24) an die Kopplungsstation (16), wobei die Formungstrommelspeicher-Übergabeeinrichtung (31) dazu geeignet ist, in dem temporären Formungstrommel-Speicher (24) eine Formungstrommel (14) als eine Funktion der Dimensionen des Reifens, der gefertigt werden soll, auszuwählen und sie an die Kopplungsstation (16) zu übertragen.

13. Anlage zur Fertigung von Reifen nach Anspruch 11, umfassend eine Formungstrommelspeicher-Übergabeeinrichtung (31), die von dem temporären Formungstrommel-Speicher (24) bedient wird und dazu geeignet ist, die Formungstrommeln (14) innerhalb des temporären Formungstrommel-Speichers (24) zu übertragen.

14. Anlage zur Fertigung von Reifen nach Anspruch 12 oder 13, wobei die Formungstrommelspeicher-Übergabeeinrichtung (31) einen anthropomorphen Roboterarm umfasst, der einer Transportlinie zugeordnet ist.

## Revendications

1. Procédé de construction de pneus comprenant le fait :
de sélectionner, dans un entreposage temporaire de tambours de formation (24), un tambour de formation (14) en fonction des dimensions du pneu à construire,
d'associer le tambour de formation sélectionné (14) à une paire respective de bagues de support (15),
de réaliser une première séquence (17) d'opérations de construction d'un pneu en cours de traitement sur ledit tambour de formation (14) associé à ladite paire de bagues de support (15),
de retirer ladite paire de bagues de support (15) du tambour de formation (14), ledit pneu en cours de traitement restant associé au tambour de formation (14) détaché de ladite paire de bagues de support (15),
de réaliser une deuxième séquence (20) d'opérations de construction du pneu en cours de traitement sur ledit tambour de formation (14) détaché de ladite paire de bagues de support (15),
de séparer le pneu en cours de traitement dudit tambour de formation (14), lors de l'achèvement de la construction du pneu,
de placer en attente, dans ledit entreposage temporaire de tambours de formation (24), le tambour de formation (14) séparé du pneu en cours de traitement, de générer un dernier tambour de formation (14) d'une pluralité de tambours de formation (14) en attente dans ledit entreposage temporaire de tambours de formation (24).

2. Procédé de construction de pneus tel que revendiqué dans la revendication 1, comprenant le fait de sélectionner parmi ladite pluralité de tambours de formation (14) en attente dans ledit entreposage temporaire de tambours de formation (24), ledit dernier tambour de formation (14) en attente.

3. Procédé de construction de pneus tel que revendiqué dans la revendication 1, comprenant le fait de sélectionner parmi ladite pluralité de tambours de formation (14) en attente dans ledit entreposage temporaire de tambours de formation (24), un tambour de formation (14) différent dudit dernier tambour de formation (14) en attente.

4. Procédé de construction de pneus tel que revendiqué dans la revendication 1, comprenant le fait de transférer dans ledit entreposage temporaire de tambours de formation (24) ledit dernier tambour de formation (14) en attente.

5. Procédé de construction de pneus tel que revendiqué dans la revendication 1, dans lequel lesdites première et deuxième séquences (17, 20) d'opérations de construction d'un pneu en cours de traitement comprennent le fait de construire une structure de carcasse (3) du pneu en cours de traitement, cette dernière étant ensuite façonnée et assemblée à une structure de sommet respective (2a) du pneu en cours de traitement, définissant un pneu cru.

6. Procédé de construction de pneus tel que revendiqué dans la revendication 1, dans lequel une opération de construction d'un premier pneu en cours de traitement est adaptée pour être réalisée sur un premier tambour de formation (14) associé à la paire respective de bagues de support (15) simultanément et indépendamment, par rapport à une opération différente de construction d'un deuxième pneu en cours de traitement réalisée sur un deuxième tambour de formation (14) associé à la paire respective de bagues de support (15) ou à une opération de construction d'un troisième pneu en cours de traitement réalisée sur un troisième tambour de formation (14) détaché de la paire respective de bagues de support (15) ou vice versa.

7. Procédé de construction de pneus tel que revendiqué dans la revendication 1, comprenant le fait de fixer et de réguler au moins une dimension axiale du tambour de formation sélectionné (14) avant de le coupler à la paire respective de bagues de support (15).

8. Procédé de construction de pneus tel que revendiqué dans la revendication 1, dans lequel ledit tambour de formation (14) sélectionné à partir de l'entreposage temporaire de tambours de formation est transféré à un poste (16) pour coupler des paires de bagues de support afin d'associer le tambour de formation (14) sélectionné à une paire respective de bagues de support (15).

9. Procédé de construction de pneus tel que revendiqué dans la revendication 1, comprenant le fait de déplacer ledit dernier tambour de formation (14) transféré dans l'entreposage temporaire de tambours de formation (24) d'une position d'attente temporaire à une position d'attente finale.

10. Procédé de construction de pneus tel que revendiqué dans la revendication 1, comprenant le fait de prélever, à partir de l'entreposage temporaire de tambours de formation (24), un tambour de formation (14) différent dudit dernier tambour de formation (14) transféré dans l'entreposage temporaire de tambours de formation (24) et de déplacer par la suite ledit dernier tambour de formation (14) transféré dans l'entreposage temporaire de tambours de formation (24) d'une position d'attente temporaire à une position d'attente finale.

11. Installation de construction de pneus comprenant :
une pluralité de tambours de formation (14),
au moins une paire de bagues de support (15) qui peuvent être associées de manière amovible à au moins l'un desdits tambours de formation (14),
un poste de couplage (16) pour coupler des paires de bagues de support (15) au tambour de formation respectif (14),
une première séquence de postes de construction (18a-18g) pour des pneus en cours de traitement, fonctionnant chacun sur un tambour de formation (14) associé à l'une desdites paires de bagues de support (15),
un poste de retrait (19) pour retirer des paires de bagues de support (15) dudit tambour de formation (14),
une deuxième séquence de postes de construction (21a-21c) de pneus en cours de traitement, fonctionnant chacun sur un tambour de formation (14) détaché de ladite paire de bagues de support (15),
un poste de façonnage (22) où un pneu façonné en cours de traitement est séparé dudit tambour de formation (14) détaché de ladite paire de bagues de support (15), **caractérisée en ce qu'**elle comprend
un entreposage temporaire de tambours de formation (24) pour placer en attente les tambours de formation (14) détachés de ladite paire de bagues de support (15) et séparés du pneu façonné en cours de traitement respectif venant dudit poste de façonnage (22) et
un module de commande (C) adapté pour réaliser :
la réception d'indications concernant le type de pneu à construire ;
la gestion de la présence de tambours de formation (14) dans un entreposage temporaire de tambours de formation (24) ;
l'entraînement d'un dispositif de transfert pour l'entreposage de tambours de formation (31) ;
la gestion de la présence de paires de bagues de support (15) dans un entreposage temporaire de paires de bagues de support (32) ;
l'entraînement d'un dispositif de transfert pour l'entreposage de paires de bagues de support (33).

12. Installation de construction de pneus telle que revendiquée dans la revendication 11, comprenant un dispositif de transfert pour l'entreposage de tambours de formation (31) desservi par l'entreposage temporaire de tambours de formation (24) pour transférer les tambours de formation de l'entreposage temporaire de tambours de formation (24) au poste de couplage (16), où ledit dispositif de transfert pour l'entreposage de tambours de formation (31) est adapté pour sélectionner, dans l'entreposage temporaire de tambours de formation (24), un tambour de formation (14) en fonction des dimensions du pneu à construire et pour le transférer au poste de couplage (16).

13. Installation de construction de pneus telle que revendiquée dans la revendication 11, comprenant un dispositif de transfert pour l'entreposage de tambours de formation (31) desservi par l'entreposage temporaire de tambours de formation (24) adapté pour transférer les tambours de formation (14) dans l'entreposage temporaire de tambours de formation (24).

14. Installation de construction de pneus telle que revendiquée dans la revendication 12 ou 13, dans laquelle ledit dispositif de transfert pour l'entreposage de tambours de formation (31) comprend un bras robotisé anthropomorphe associé à une chaîne de transport.
